# DEMANDE DE BREVET EUROPEEN

(11) **EP 0 985 611 A1**
(43) Date de publication de la demande: **15.03.2000**
(21) Numéro de dépôt: 99402173.1
(22) Date de dépôt: 02.09.1999
(51) Int. Cl.: B65D 90/48, G01F 23/02, G01F 23/04

(54) **Dispositif de mesure du niveau de remplissage d'une citerne, dôme comprenant un tel dispositif de mesure et citerne pourvue d'un tel dispositif de mesure**

(30) Priorité: 09.09.1998 FR 9811270
(71) Demandeur: General Trailers France S.A., 91042 Evry Cédex (FR)
(72) Inventeur: Cueille, Laurent, 54000 Nancy (FR); Lesieur, Claude, 54290 Bayon (FR)
(74) Mandataire: Michelet, Alain

(57) **Abrégé**

Dispositif de mesure du niveau de remplissage d'une citerne, comprenant une règle graduée (11) destinée à être placée dans la citerne. Dans l'état monté du dispositif, la règle (11) est fixée à l'intérieur de la citerne. Le dispositif comprend en outre un tube (12) au moins partiellement translucide, fermé à une de ses extrémités (14) et ouverte vers l'extérieur de la citerne à l'autre de ses extrémités (15) et disposé approximativement parallèlement à la règle, le tube étant destiné à recevoir, par son extrémité ouverte, un endoscope (30) permettant la lecture de la règle sans ouvrir la citerne.

## Description

L'invention concerne un dispositif de mesure du niveau de remplissage d'une citerne et notamment un dispositif de mesure comprenant une règle graduée destinée à être placée dans la citerne, ainsi qu'un dôme comprenant un tel dispositif de mesure, et une citerne pourvue d'un tel dispositif de mesure.

Les citernes semi-remorques pour hydrocarbures légers acheminent de l'essence destinée aux moteurs d'automobiles depuis les dépôts de carburant et les raffineries jusqu'à des stations-service. Le paiement du carburant par les gérants des stations-service s'effectue à sa livraison et est directement proportionnel au volume délivré. Il est donc important de connaître avec précision ces quantités.

Une des techniques couramment utilisées en France, qui est réglementée par la Sous-Direction de la Métrologie Française par un arrêté du 28 septembre 1990 "relatif aux récipients-mesures utilisés pour le transport routier ou ferroviaire des produits liquides à la pression atmosphérique" consiste à construire des citernes comprenant plusieurs cuves dont chacune constitue un compartiment mesure. Lors de la construction d'une citerne semi-remorque, on établit pour chaque compartiment un barème de jaugeage mettant en correspondance la hauteur atteinte par le liquide présent dans la cuve, et son volume.

A la livraison du carburant, le réceptionnaire mesure à l'aide d'un sabre de jaugeage, c'est-à-dire à l'aide d'une règle millimétrée avec support perpendiculaire, qui est à disposition sur la citerne, la hauteur du liquide et en déduit, grâce au barème de jaugeage, le volume présent dans chacun des compartiments qui doivent être vidés. Pour effectuer cette mesure, le réceptionnaire passe un sabre de jaugeage au travers d'une ouverture prévue à cet effet en partie supérieure de la cuve et le pose sur deux plots appelés repos de sabre, dont les surfaces supérieures, coplanaires et horizontales, définissent un plan de référence par rapport auquel est repéré le niveau du contenu de la cuve.

A la fin de la vidange de la cuve concernée, le réceptionnaire contrôle visuellement par l'ouverture, par exemple par le couvercle de trou d'homme ouvert, que la cuve a bien été vidée. Le volume initialement contenu dans les cuves vidangées lors de la livraison devient alors le volume de carburant livré au réceptionnaire et qui lui sera facturé.

Cette technique connue implique donc une première opération de mesure de la hauteur du contenu dans la citerne ou dans chacune de ses cuves et une seconde opération consistant à contrôler la vidange complète des cuves concernées. De plus, cette technique connue nécessite d'ouvrir la citerne au moyen d'un couvercle prévu à cet effet, ce qui occasionne une pollution de l'air par émission de vapeurs d'hydrocarbures dans l'atmosphère.

Le but de l'invention est de remédier aux inconvénients décrits ci-avant.

Plus particulièrement, l'invention doit rendre possible d'effectuer la mesure du niveau de remplissage d'une citerne sans nuisance de l'atmosphère par la phase gazeuse du produit contenu dans la citerne.

Le but de l'invention est atteint par un dispositif de mesure du niveau de remplissage d'une citerne, comprenant une règle graduée destinée à être placée dans la citerne.

Dans le présent texte, les termes "citerne", "cuve" et "compartiment" sont utilisés indifféremment, sachant que le dispositif de mesure de l'invention ne peut être utilisé que pour la mesure d'un seul volume à la fois, qu'il s'agisse du volume d'une citerne ayant une cuve unique, ou du volume d'une cuve constituant avec d'autres cuves une citerne.

Conformément à l'invention, dans l'état monté du dispositif, la règle est fixée à l'intérieur de la citerne. De plus, le dispositif comprend un tube au moins partiellement translucide, fermé à une de ses extrémités et ouvert vers l'extérieur de la citerne à l'autre de ses extrémités et disposé perpendiculairement à la génératrice supérieure de la citerne, le tube étant destiné à recevoir, par son extrémité ouverte, un endoscope permettant la lecture de la règle sans ouvrir la citerne.

Cette disposition permet de garder la citerne, ou respectivement chacune des cuves concernées, fermée pendant la mesure du niveau de remplissage de la citerne, grâce aux dispositions de l'invention: d'abord, la règle est graduée et montée en position fixe à l'intérieur de la citerne, ce qui évite de devoir la mettre en place chaque fois qu'une mesure de niveau doit être effectuée. Ensuite, la disposition de l'invention permet de lire la règle graduée à partir d'un tube au moins partiellement translucide également disposé à l'intérieur de la citerne et au moins approximativement parallèlement à la règle graduée. Ceci permet d'introduire un dispositif de lecture tel qu'un endoscope à l'intérieur de la citerne ou de la cuve correspondante sans entrer en contact avec le liquide contenu dans la citerne et, réciproquement, sans que le contenu de la citerne entre en contact avec l'atmosphère extérieure pendant l'étape de mesure.

L'invention concerne également les caractéristiques ci-après, considérées isolément ou en combinaison selon toutes leurs combinaisons techniquement possibles.
- La règle graduée est positionnée verticalement et fixée sur un support solidaire de la partie chaudronnée de la citerne.
- Le tube est monté sur un support destiné à être fixé sur la citerne et plus particulièrement à la partie supérieure de la citerne.
- La règle graduée et le tube sont fixés de façon rigide, la position de la règle étant garantie par scellement (plomb, point de soudure...).

Ces dispositions permettent de mesurer, avec une précision millimétrique, la hauteur du liquide présent dans la citerne ou dans chacune de ses cuves, sans que des vapeurs d'hydrocarbures puissent s'échapper dans l'atmosphère. De plus, la solution que l'invention propose est entièrement mécanique et donc simple et fiable. Elle peut d'ailleurs être mise en oeuvre également sur des citernes existantes.

Par ailleurs, la solution proposée par l'invention est une solution très sécurisée pour une utilisation en zone inflammable, puisque la seule source d'électricité est la pile de la lampe-torche antidéflagrante de l'endoscope.
- La règle graduée est réalisée en un matériau résistant aux influences corrosives des hydrocarbures et qui assure une bonne visibilité de sa graduation à long terme et, notamment, sans que le dépôt de différentes matières résiduelles provenant par exemple des réservoirs de stockage de carburant, puisse nuire à la lisibilité de la graduation.
- La règle graduée est réalisée en aluminium ou en acier inoxydable.

La réalisation de la règle graduée en ces matériaux rend par ailleurs possible de fixer la règle sur un support par soudure, notamment par soudure à l'arc.

Le tube est avantageusement réalisé en une matière plastique (exemple PPMA: Polyméthacrylate de méthyle) et entièrement translucide; il peut être fixé sur un support par thermosoudure ou être fileté et vissé sur un support taraudé.

Toutefois, il est concevable que le tube soit réalisé en un matériau non transparent, ni translucide sur sa plus grande partie et qu'une fenêtre en un matériau translucide soit aménagée sur au moins la plus grande partie de la longueur du tube. Une telle conception permet de choisir pour le corps du tube un matériau qui permette de faciliter la fixation du tube sur un support, notamment par soudure.

Le but de l'invention est également atteint par un dôme d'une citerne, qui comprend un dispositif de mesure du niveau de remplissage de la citerne tel que décrit ci-avant.

Avantageusement, le dôme comprend, outre les équipements de service habituels, c'est-à-dire un évent vapeur, une sonde anti-débordement, un dispositif d'aération et un couvercle de visite, un voyant translucide pour l'acquisition de la vacuité de la citerne, ainsi qu'un tube intérieur également translucide et destiné à recevoir un endoscope.

Chaque citerne est équipée d'un endoscope unique pour l'ensemble des cuves constituant la citerne.

Le but de l'invention est également atteint par une citerne pourvue d'un dispositif de mesure du niveau de remplissage de la citerne tel que décrit plus haut.

Dans une citerne selon l'invention, la règle graduée, qui remplit la fonction d'un indicateur de niveau, est fixée de façon rigide sur un support qui est lui-même fixé de façon rigide sur la citerne, et notamment sur une virole de dôme. Les différents éléments du dispositif de mesure sont montés à l'intérieur de la citerne de façon telle que leurs positions respectives ne soient pas affectées par des effets de vagues à l'intérieur de la citerne. Leur solidarité est avantageusement garantie par des moyens inviolables tels que la soudure et le plombage.

Conformément à l'arrêté cité plus haut, la règle graduée est fixée au plus près de la verticale de pige, c'est-à-dire au plus près d'une verticale passant par le centre de gravité de la surface libre du liquide lorsque ce dernier atteint le volume nominal de la citerne ou de la cuve correspondante. Le positionnement et la longueur de la règle graduée sont définis de façon à pouvoir mesurer la hauteur de liquide sur toute la zone de barémage.

La zone de barémage est, selon l'arrêté cité plus haut, la zone entre un niveau supérieur ou égal à celui correspondant à la sensibilité minimale exigée et le plan de débordement.

La sensibilité d'un compartiment de récipient mesuré au voisinage d'un niveau de remplissage déterminé est, selon l'arrêté cité plus haut, la variation de la hauteur de ce niveau rapportée à la variation de volume du liquide contenu provoquant cette variation de hauteur. Dans toute la zone où des hauteurs de liquide ou des volumes peuvent être repérés, la sensibilité est au moins égale à un millimètre et demi pour le millième du volume contenu au niveau considéré.

La zone de lecture de la règle graduée s'étend sur une partie ou la totalité de la zone de barémage.

La lecture de la mesure du niveau de remplissage d'une citerne comprenant un dispositif selon l'invention est effectuée en utilisant le tube translucide du dispositif selon l'invention et un endoscope. Sur chaque virole de dôme ou sur chaque couvercle de trou d'homme ou encore sur chaque bride de piquage d'une citerne, est fixé, outre la règle graduée décrite plus haut, un tube au moins partiellement translucide destiné à recevoir un endoscope. Ce tube est monté plongeant à l'intérieur de la citerne. Il présente les caractéristiques suivantes:
- le tube est réalisé au moins partiellement en un matériau translucide résistant aux hydrocarbures;
- la tenue du tube aux effets de carène dans la citerne est garantie par l'inertie du tube et par la rigidité de sa fabrication;
- l'extrémité inférieure du tube est obturée et le tube est fixé étanche sur la virole ou le couvercle cité plus haut pour éviter tout échappement d'hydrocarbures, soit sous la forme de vapeur ou sous la forme de liquide, dans l'atmosphère;
- l'obturation de l'extrémité supérieure du tube est assurée par un bouchon ou par un couvercle destiné à protéger l'intérieur du tube de toute pollution extérieure par pluie, neige, etc.; le bouchon ou couvercle assure, par ailleurs, la pérennité de l'étanchéité au niveau du plateau en cas de bris du tube;
- la longueur du tube est au minimum égale à celle de la règle graduée;
- la distance entre la règle graduée et le tube est définie de façon à garantir une bonne visibilité de la graduation de la règle. Avantageusement, cette distance est comprise entre 1 cm et 10 cm.

L'endoscope est constitué avantageusement d'une fibre optique, c'est-à-dire d'un faisceau de fibres de verre, permettant d'acheminer de l'énergie lumineuse de l'extérieur vers l'intérieur de la citerne, au travers du tube translucide, et d'un jeu de lentilles pour acheminer à l'extérieur de la citerne, une image de l'intérieur de la citerne, et d'un corps métallique rigidifiant la fibre optique.

L'endoscope permet de visualiser au travers d'un tube translucide, la position de la surface libre du liquide dans la citerne sur la règle graduée. Le champ visuel de l'endoscope est représenté par une zone circulaire de l'ordre de 10 mm de diamètre et varie suivant la distance règle/endoscope. La longueur de l'endoscope est définie de façon à couvrir l'intégralité de la zone de barémage. La source lumineuse de l'endoscope est constituée par une lampe-torche ADF (anti-déflagrante) alimentée par piles électriques.

Dans le cas où la citerne est chargée par le dôme, une tôle de protection est disposée à l'intérieur de la citerne, et avantageusement fixée sur la virole de dôme. Une telle tôle de protection protège la règle graduée de tout contact avec une cale de chargement.

D'autres caractéristiques et avantages de l'invention ressortiront à la lecture de la description d'un mode de réalisation en référence aux dessins. Dans ces dessins:

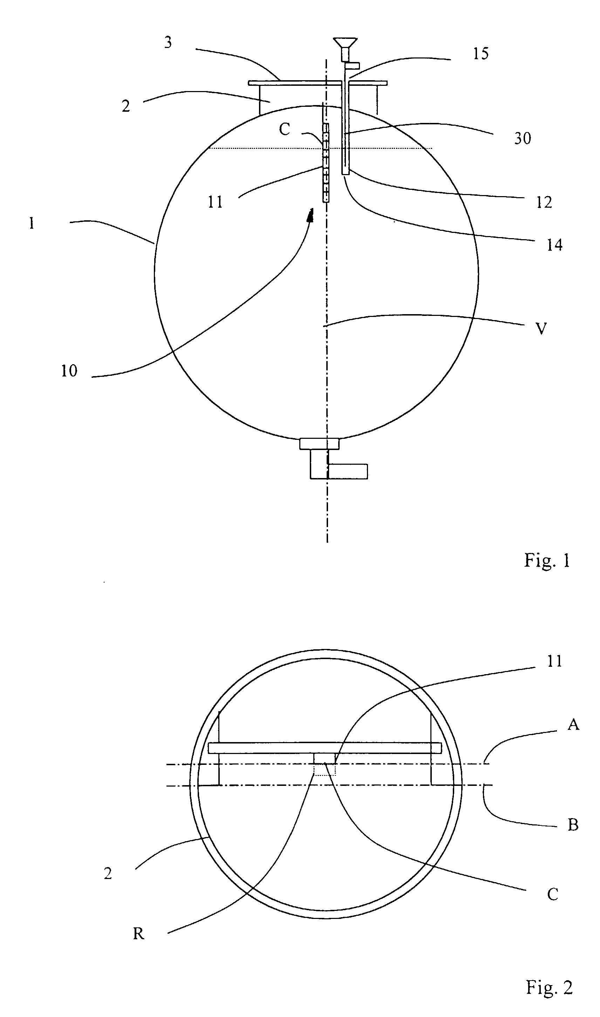

La Figure 1 représente de manière schématique la disposition du dispositif de mesure selon l'invention dans une citerne.

La Figure 2 représente le positionnement de la règle graduée par rapport à l'axe longitudinal de la citerne.

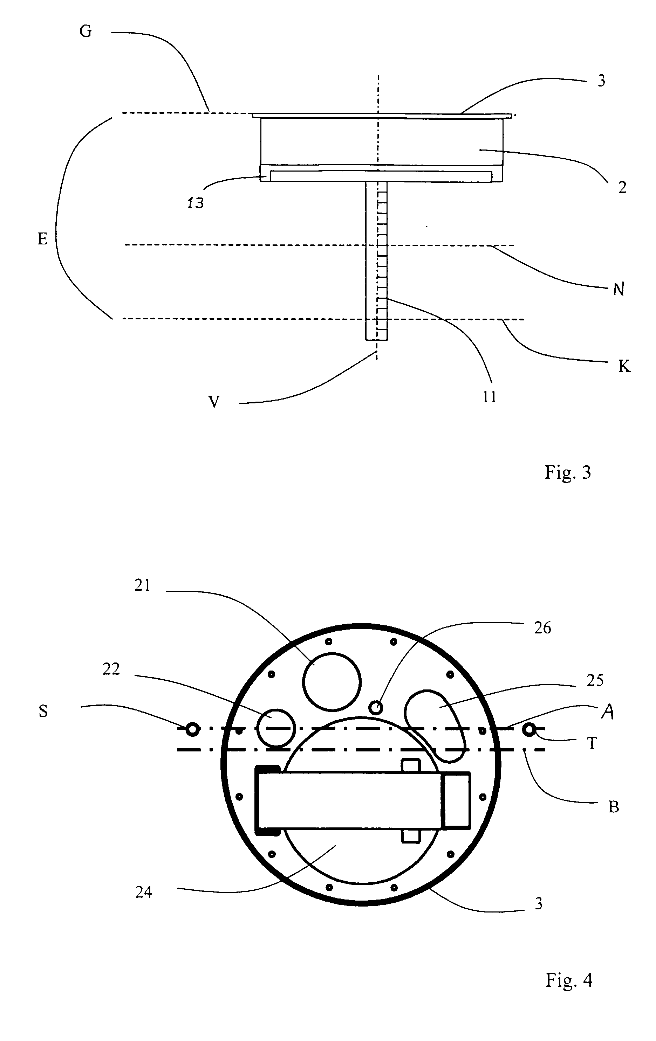

La Figure 3 représente la zone de lecture d'une règle graduée et le niveau atteint par le liquide au volume nominal de la cuve.

La Figure 4 représente, en vue de dessus, l'implantation du dispositif de l'invention sur un couvercle de trou d'homme.

Dans une citerne constituée de plusieurs cuves 1, chaque cuve est surmontée d'une virole de dôme 2 couvert d'un couvercle 3, appelé aussi couvercle de trou d'homme. Sur la virole de dôme 2 ou la cuve 1 est fixé un dispositif de mesure 10 selon l'invention.

Le dispositif de mesure 10 selon l'invention comprend une règle graduée 11 et un tube intérieur translucide 12. La règle 11 est montée sur un support 13 et fixée à l'intérieur de la citerne. Le tube 12 est fixé sur le couvercle 3. L'extrémité libre 14 du tube 12 est fermée, alors que l'autre extrémité 15 du tube 12 est ouverte vers l'extérieur de la citerne afin que le tube 12 puisse recevoir un endoscope 30.

La règle graduée 11 est disposée à l'intérieur de le cuve 1 le plus près possible de l'axe longitudinal A de la citerne et donc de la cuve 1 et le plus près possible du centre de gravité C de la surface libre du contenu de la cuve 1 lorsque cette dernière atteint le volume nominal de la cuve.

La règle graduée 11 est pourvue d'une graduation millimétrique et couvre une zone de lecture E allant d'une limite supérieure G constituée par le plan de débordement, jusqu'à une limite inférieure K définie en dessous d'un niveau N que le liquide atteint lorsque la cuve est remplie à son volume nominal. La zone de lecture E correspond à la zone de barémage.

Chaque cuve 1 est pourvue des équipements de service habituels, à savoir d'un évent vapeur 21, d'une sonde anti-débordement 22, d'un dispositif d'aération 23, d'un couvercle 24, d'un voyant translucide 25 et d'un orifice 26 auquel aboutit le tube 12. Avantageusement l'orifice 26 est fermé par un bouchon ou couvercle le temps durant lequel aucune mesure n'est effectuée.

Selon une variante de réalisation, la citerne ou le (ou les) couvercle(s) de dôme peut être pourvu d'une zone de passage R d'un sabre de jaugeage et de deux repos de sabre S, T correspondants. Cette disposition permet d'utiliser, en complément du dispositif selon l'invention, un sabre de jaugeage
- pour contrôler la lecture de temps à autre afin d'assurer qu'il n'y a pas d'écart dans le temps; et
- pour mesurer le niveau du contenu, si celui-ci est un hydrocarbure émettant peu de vapeurs (par exemple du gasoil).

Les signes de référence insérés après les caractéristiques techniques mentionnées dans les revendications, ont pour seul but de faciliter la compréhension de ces dernières, et n'en limitent aucunement la portée.

## Revendications

1. Dispositif de mesure (10) du niveau de remplissage d'une citerne (1), comprenant une règle graduée (11) destinée à être placée dans la citerne (1), caractérisé en ce que la règle (11), dans l'état monté du dispositif, est fixée à l'intérieur de la citerne et en ce que le dispositif comprend un tube (12) au moins partiellement translucide, fermé à une (14) de ses extrémités (14, 15) et ouverte vers l'extérieur de la citerne à l'autre (15) de ses extrémités et disposé perpendiculairement à la génératrice supérieure de la citerne (1), le tube (12) étant destiné à recevoir, par son extrémité ouverte (15), un endoscope (30) permettant la lecture de la règle (11) sans ouvrir la citerne (1).

2. Dispositif selon la revendication 1, caractérisé en ce que la règle (11) est réalisée en un matériau résistant aux influences corrosives des hydrocarbures.

3. Dispositif selon la revendication 2, caractérisé en ce que la règle (11) est réalisée en aluminium.

4. Dispositif selon la revendication 2, caractérisé en ce que la règle (11) est réalisée en acier inoxydable.

5. Dispositif selon la revendication 1, caractérisé en ce que la règle graduée (11) est montée sur un support (13) destiné à être fixé sur la citerne.

6. Dôme d'une citerne (1) pourvu d'un dispositif permettant de mesurer le niveau de remplissage de cette citerne (1), caractérisé en ce que ce dispositif comprend une règle graduée (11) fixée à l'intérieur de la citerne (1) et un tube (12) destiné à recevoir, par une extrémité (15) ouverte vers l'extérieur de la citerne (1), un endoscope (30) permettant la lecture de la règle (11) sans ouvrir la citerne (1).

7. Citerne, caractérisée en ce qu'elle est pourvue d'un dispositif de mesure (10) du niveau de remplissage de la citerne, une règle graduée (11) destinée à être placée dans la citerne étant fixée à l'intérieur de la citerne, le dispositif comprenant un tube (12) au moins partiellement translucide, fermé à une (14) de ses extrémités (14, 15) et ouverte vers l'extérieur de la citerne à l'autre (15) de ses extrémités et disposé parallèlement à la règle (11), le tube (12) étant destiné à recevoir, par son extrémité ouverte (15), un endoscope (30) permettant la lecture de la règle (11) sans ouvrir la citerne (1).

8. Citerne selon la revendication 7, caractérisé en ce que le dispositif (10) comprend un voyant (25) destiné à contrôler la vacuité de la cuve.
